# EUROPÄISCHE PATENTSCHRIFT

(11) **EP 4 008 912 B1**
(45) Veröffentlichungstag und Bekanntmachung des Hinweises auf die Patenterteilung: **06.08.2025**
(21) Anmeldenummer: 22153959.6
(22) Anmeldetag: 10.06.2015
(51) Int. Cl.: F04F 9/00, F04F 9/08, F04F 9/04

(54) **DIFFUSIONSPUMPE**
DIFFUSION PUMP
POMPE À DIFFUSION

(30) Priorität: 30.06.2014 DE 102014212644
(43) Veröffentlichungstag der Anmeldung: 08.06.2022
(62) Teilanmeldung aus: 15729420.8
(73) Patentinhaber: Leybold GmbH, 50968 Köln (DE)
(72) Erfinder: SCHWEIZER, Hans-Werner, 50321 Brühl (DE)
(74) Vertreter: Arnold, Emily Anne

(56) Entgegenhaltungen:
- GB-A- 566 616
- GB-A- 686 659
- JP-A- 2011 255 250
- JP-U- S6 110 999
- US-A- 4 191 512
- US-A1- 2011 021 332

## Beschreibung

Die Erfindung betrifft eine Diffusionspumpe.

Übliche Diffusionspumpen weisen einen Siederaum auf, in welchem ein Heizelement angeordnet ist. Durch das Heizelement wird ein Treibmittel verdampft. Unmittelbar an den Siederaum anschließend weist eine übliche Diffusionspumpe ein Gehäuse auf. Im dem Gehäuse ist eine Düse angeordnet. Der Treibmitteldampf steigt vom Siederaum auf zur Düse, wird durch die Düse zu einem schirmförmigen Dampfstrahl umgelenkt und reißt diffundierende Gasmoleküle mit. Anschließend wird der Treibmitteldampf durch einen Kondensator wieder kondensiert. Das kondensierte Treibmittel gelangt wieder zurück zum Siederaum. Das mitgeführte Gas wird durch eine, an einem Vorvakuumstutzen angeschlossene Vakuumpumpe abgepumpt. Durch diesen Prozess wird Gas aus einer Vakuumkammer heraus gefördert, sodass in der Vakuumkammer ein Vakuum entsteht.

Der in einer Diffusionspumpe verwendete Diffusionsprozess weist einen hohen Energieverbrauch auf. Zunächst muss das Treibmittel bei einer hohen Temperatur zum Sieden bzw. Verdampfen gebracht werden. Dies erfolgt üblicherweise durch elektrische Heizenergie. Jedoch muss der Treibmitteldampf wieder zum Kondensieren gebracht werden. Hierzu muss die eingebrachte Wärme wieder abgeführt werden. Abgeführte Wärme ist Verlustenergie, die dem Gesamtprozess entzogen wird.

Darüber hinaus wird der Diffusionsprozess bei bekannten Diffusionspumpen unreguliert betrieben, d.h. das Heizelement heizt das Treibmittel auf eine voreingestellte (Temperatur-) Wert auf. Diese voreingestellte Temperatur wird nachfolgend konstant gehalten. Auch wird an die voreingestellte Temperatur keine höhere Anforderung gestellt außer, dass ein Verdampfen des Treibmittels erfolgt und das Treibmittel nicht thermisch zersetzt wird. Auch die Kühlung der bekannten Diffusionspumpen ist unreguliert, sodass eine maximale Kühlung gewählt wird. Bei einem unregulierten Heizelement kommt hinzu, dass nicht benötigte Heizwärme durch eine verstärkte Kühlung abgeführt werden muss.

Somit sind bekannte Diffusionspumpen energieineffizient und zeichnen sich durch einen unnötig hohen Energieverbrauch aus.

US 2011/021332 A1 beschreibt eine Zentrifuge, die einen Rotor zur Aufnahme einer Probe, eine Rotationskammer zur Unterbringung des Rotors, einen Motor zum Drehen des Rotors, eine Öldiffusionspumpe zur Reduzierung eines Drucks innerhalb der Rotationskammer und eine Steuereinheit zur Steuerung der Heiztemperatur der Öldiffusionspumpe für eine Zielsolltemperatur umfasst. Die Steuereinheit ändert die Zielsolltemperatur von einer ersten vorgegebenen Temperatur auf eine zweite vorgegebene Temperatur, die niedriger ist als die erste vorgegebene Temperatur, nachdem eine vorgegebene Zeitspanne seit dem Beginn der Steuerung der Heiztemperatur verstrichen ist.

JP S61 10999 U beschreibt ein Kühlrohr, das um eine äußere Umfangsfläche eines Gehäuses gewickelt ist und ein Heizgerät, das an einem unteren Endabschnitt des Gehäuses angebracht ist. Ferner ist ein Thermoelement zur Erfassung der Temperatur innerhalb des Kühlrohrs bzw. des Heizkessels vorgesehen. Ein Temperaturregler ist vorgesehen, um die Pumpe zu stoppen, wenn jedes Thermoelement in Reihe geschaltet ist und die Summe der von den jeweiligen Thermoelementen erfassten Temperaturen um 10 bis 20 °C höher ist als im Normalbetrieb der Diffusionsvakuumpumpe.

Aufgabe der vorliegenden Erfindung ist es eine Diffusionspumpe zu schaffen, bei der der Energieverbrauch gesenkt wird.

Die Aufgabe wird gelöst durch ein Verfahren gemäß Anspruch 1.

Eine Diffusionspumpe gemäß eines Beispiels, insbesondere eine energieeffiziente Diffusionspumpe, weist ein Gehäuse auf. Mit dem Gehäuse ist ein Siederaum verbunden, wobei im Bereich des Siederaums ein Heizelement angeordnet ist. Durch das Heizelement im Siederaum wird ein Treibmittel verdampft. Im Gehäuse ist eine Düse angeordnet, welche mit dem Siederaum verbunden ist. Der Treibmitteldampf aus dem Siederaum gelangt somit zur Düse und tritt durch die Düse aus. An einer Innenseite des Gehäuses, im Bereich der Düse, ist ein Kondensator angeordnet. Weiter ist im Bereich des Kondensators eine Kühlung angeordnet zur Kühlung des Kondensators. Der aus der Düse austretende Treibmitteldampf gelangt zu dem Kondensator und kondensiert an der Düse. Das kondensierte Treibmittel gelangt wieder in den Siederaum der Diffusionspumpe. Insbesondere ist mit dem Gehäuse eine Vakuumkammer verbunden, welche durch die Diffusionspumpe evakuiert wird.

Der Siederaum ist thermisch vom Gehäuse und insbesondere vom Kondensator durch einen Isolator getrennt. Durch den Isolator wird verhindert das Wärme, die durch das Heizelement im Siederaum erzeugt wird, übertragen werden kann auf den Kondensator, da die Temperatur im Siederaum erheblich höher ist als die Temperatur des Kondensators. Wärme, die bei einem fehlenden Isolator vom Siederaum auf den Kondensator übertagen werden würde, müsste durch die Kühlung des Kondensators wieder abgeführt werden, um eine konstante Temperatur des Kondensators zu gewährleisten. Dies erhöht die Anforderung an die Kühlung des Kondensators. Gleichzeitig entsteht durch die abgeleitete Wärme eine Verlustenergie, da die abgeleitete Wärme nicht mehr zur Aufheizung des Treibmittels zur Verfügung steht. Der Isolator zeichnet sich deshalb insbesondere durch eine geringe Wärmeleitfähigkeit aus, sodass Wärme gerade nicht vom Siederaum auf den Kondensator übertragen werden kann. Hierdurch wird sowohl der Energieverbrauch des Heizelements reduziert als auch die Anforderung an die Kühlung des Kondensators.

Alternativ oder zusätzlich ist die Kühlung des Kondensators der Diffusionspumpe zumindest teilweise ausgebildet als Wasserkühlung. Hierbei wird die am Kondensator auftretende Kondensationswärme durch die Wasserkühlung abgeführt.

Alternativ oder zusätzlich hierzu ist die Kühlung des Kondensators der Diffusionspumpe über eine Wärmepumpe mit dem Heizelement verbunden. Hierdurch wird Wärme, die am Kondensator durch das Kondensierten des Treibmitteldampfs entsteht, zum Heizelement befördert, sodass die beförderte Wärme benutzt werden kann, um das Treibmittel zu verdampfen. Durch die Wärmepumpe ist es möglich, Wärmeenergie, die durch den Kondensator dem Prozess entzogen werden muss, dem Pumpprozess durch das Heizelement wieder zugeführt werden kann. Dies reduziert die Verlustleistung des Prozess erheblich, sodass sowohl die erforderliche Energie für das Heizelement reduziert werden kann, als auch die Anforderung an die Kühlung des Kondensators. Insbesondere, falls es sich bei der Kühlung des Kondensators um eine Wasserkühlung handelt, kann durch das Vorsehen einer Wärmepumpe die erforderliche Wassermenge zur Kühlung des Kondensators reduziert werden.

Alternativ oder zusätzlich weist die Diffusionspumpe eine Temperaturerfassung auf, die die Kondensatortemperatur erfasst, wobei die Temperaturerfassung mit einer Kondensatorkühlungsregelung verbunden ist zur Regelung der Kühlung des Kondensators. Hierdurch kann die Kühlung des Kondensators individuell angepasst werden an die vorliegenden Erfordernisse. Hierbei ist eine Reduzierung der Temperatur des Kondensators auf die niedrigste mögliche Temperatur nicht mehr erforderlich. Durch die Regelung der Kühlung des Kondensators und der damit verbundenen Anpassung an die erforderliche Kondensatortemperatur kann weitere Energie, insbesondere Energie zur Kühlung des Kondensators, verringert werden. Handelt es sich bei der Kühlung des Kondensators um eine Wasserkühlung, kann durch das Vorsehen einer Temperaturerfassung und einer mit der Temperaturerfassung verbundenen Kondensatorkühlungsregelung die erforderliche Kühlwassermenge reduziert werden.

Alternativ oder zusätzlich hierzu weist die Diffusionspumpe eine Heizelementregelung auf, die mit dem Heizelement verbunden ist. Durch die Heizelementregelung ist die Leistung des Heizelements anpassbar an die vorliegende Pumpsituation. Dabei sind drei Pumpsituationen denkbar. Bei einer ersten Pumpsituation ist kein oder nur ein geringes Pumpen der Diffusionspumpe erforderlich. Diese Pumpsituation liegt insbesondere vor zwischen zwei Pumpvorgängen. Eine zweite Pumpsituation ist das Abpumpen, bei dem ausgehend von einem Vorvakuum, insbesondere erzeugt durch eine Vorvakuumpumpe der Arbeitsdruck in der Vakuumkammer erreicht werden soll.

Dabei ist als Arbeitsdruck der Druck zu verstehen, welcher durch die Diffusionspumpe in der Vakuumkammer erzeugt werden soll. Die zweite Pumpsituation zeichnet sich insbesondere durch einen großen Massefluss aus. In der dritten Pumpsituation wird durch die Diffusionspumpe der Arbeitsdruck in der Vakuumkammer gehalten. Weiterhin ist ein Pumpen der Diffusionspumpe erforderlich, jedoch ist der Massestrom deutlich geringer als beim Abpumpen. Je nach vorliegender Pumpsituation wird die Heizleistung des Heizelements angepasst durch die Heizelementregelung, sodass eine optimale Ausnutzung der Heizleistung vorliegt und keine überflüssige Wärme in die Diffusionspumpe eingebracht wird, welche aufwendig durch die Kühlung des Kondensators wiederum abgeführt werden müsste.

Durch einzelne der vorstehend genannten unabhängigen Maßnahmen oder durch eine Kombination erhält man eine energieeffiziente Diffusionspumpe, durch die der Energieverbrauch erheblich gesenkt werden kann.

Insbesondere ist die Diffusionspumpe ausgebildet um einen Vakuumdruck von 10⁻³ mbar, bevorzugt 10⁻⁶ mbar und besonders bevorzugt 10⁻⁹ mbar zu erzeugen.

Insbesondere weist der Isolator zur thermischen Trennung des Siederaums von dem Kondensator PEEK, PTFE, einen anderen Kunststoff oder eine Keramik auf. Diese Materialien zeichnen sich insbesondere durch eine geringe Wärmeleitfähigkeit aus, wobei gleichzeitig eine hohe thermische Stabilität dieser Materialien gewährleistet ist.

Vorzugsweise ist der Siederaum im Bereich des Heizelements insbesondere vollständig thermisch gegen die Umgebung isoliert. Hierdurch wird der Wärmeverlust durch die Abgabe der Wärme von der Außenseite des Siederaums an die Umgebung reduziert. Insbesondere wird die durch das Heizelement erzeugte Wärme im Siederaum gehalten, sodass die Heizleistung und die damit zur Aufheizung des Fördermittels erforderliche Energie weiter reduziert werden.

Insbesondere weist die Diffusionspumpe eine von der Düse axial beabstandete Dampfsperre auf, wobei die Dampfsperre eine von der Kühlung des Kondensators unabhängigen Dampfsperrkühlung aufweist. Durch die Dampfsperre soll verhindert werden, dass Treibmitteldampf in die Vakuumkammer gelangt, da der Treibmitteldampf vorher an der Dampfsperre kondensiert wird. Insbesondere ist der Temperaturunterschied zwischen der Dampfsperre und dem Kondensator groß und besonders bevorzugt größer als 20 °C. Hierdurch wird sichergestellt, dass Treibmitteldampf, welcher nicht am Kondensator kondensiert, an der Dampfsperre kondensiert wird. Insbesondere falls die Kondensatorkühlung durch das Vorsehen einer Kondensatorkühlungsregelung variabel ausgestaltet ist, ist es bevorzugt die Dampfsperrenkühlung derart auszubilden, dass eine konstante Kühlung der Dampfsperre erreicht wird. Da es sich bei der Dampfsperre um ein System handelt, welches Gerätschaften in der Vakuumkammer vor einer Beschädigung durch Treibmitteldampf schützen soll, muss sichergestellt werden, dass die Dampfsperre in jedem Fall ordnungsgemäß funktioniert. Dies wird erreicht durch die konstante Kühlung.

Insbesondere weist die Dampfsperre und der vakuumseitige Bereich des Kondensators eine Temperatur von 20°C - 30°C auf. Bei dem hochvakuumseitigen Bereich handelt es sich dabei um einen Bereich des Kondensators, welcher in Richtung der Vakuumkammer weist. Durch die geringe Temperatur der Dampfsperre und dem Kondensator ist sichergestellt, dass das Treibmittel zuverlässig kondensiert. Insbesondere kann jedoch die Temperatur des Kondensators geändert werden in Abhängigkeit des erforderlichen Arbeitsdrucks oder der erforderlichen Pumpleistung.

Insbesondere ist zwischen der Düse und dem Siederaum ein Vorvakuumstutzen angeordnet, welcher mit einer Vorvakuumpumpe verbindbar ist. Der Vorvakuumstutzen weist dabei eine Kühlung auf. Bevorzugt ist die Kühlung als Vorvakuumstützen unabhängig von der Kühlung des Kondensators. Durch die Kühlung des Vorvakuumstützens wird verhindert, dass Treibmitteldampf in die Vorvakuumpumpe gelangt.

Vorzugsweise handelt es sich bei der Kühlung des Vorvakuumstutzens und/ oder der Kühlung der Dampfsperre zumindest teilweise um eine Wasserkühlung.

Insbesondere, falls es ich bei der Kühlung des Kondensators zumindest teilweise um eine Wasserkühlung handelt, weist die Kondensatorkühlungsregelung ein Thermostatventil auf, durch das die Menge an Kühlwasser in Abhängigkeit der erfassten Kondensatortemperatur kontrolliert werden kann.

Insbesondere weist die Kondensatorkühlungsregelung eine Notfalleinrichtung auf, wobei durch die Notfalleinrichtung eine Mindestkühlung des Kondensators sichergestellt ist. Da bei Ausfall der Kühlung des Kondensators der Treibmitteldampf nicht mehr kondensiert wird, würde dieser unkontrolliert in die Vakuumkammer eintreten. Um dies zu verhindern wird durch die Notfalleinrichtung eine Mindestkühlung des Kondensators sichergestellt. Insbesondere, falls die Kondensatorkühlungsregelung ein Thermostatventil aufweist, wird die Mindestkühlung sichergestellt durch einen Bypass am Thermostatventil vorbei. Durch den Bypass fließt gerade so viel Kühlwasser, dass die Mindestkühlung des Kondensators erreicht wird. Fällt die Kondensatorkühlungsregelung aus, strömt weiterhin Kühlwasser durch den Bypass zum Kondensator zur Kühlung des Kondensators.

Insbesondere ist ein Verdampfer der Wärmepumpe mit der Kühlung des Kondensators verbunden und ein Kondensator der Wärmepumpe mit dem Heizelement verbunden. Hierdurch wird Wärme, die durch den Kondensator vom Treibmittel abgeführt wird, dem Heizelement wieder zugeführt. Insbesondere ist die Wärmepumpe als Kompressionswärmepumpe oder als Absorptionswärmepumpe ausgebildet.

Insbesondere ist es bevorzugt, die Kühlung des Kondensators sowohl durch eine Wasserkühlung als auch durch eine Wärmepumpe vorzunehmen. Insbesondere weist der hochvakuumseitige Bereich des Kondensators eine Wasserkühlung auf, und der sich in Richtung des Heizelements anschließende Bereich des Kondensators ist mit der Wärmepumpe verbunden.

Vorzugsweise ist die Wärmepumpe mehrstufig ausgebildet, wodurch ein höherer Temperaturunterschied zwischen dem Verdampfer der Wärmepumpe, der mit der Kühlung des Kondensators verbunden ist, und dem Kondensator der Wärmepumpe, der mit dem Heizelement verbunden ist, vorgesehen werden kann.

Insbesondere handelt es sich bei dem Treibmittel um ein Silikonöl, ein Mineralöl oder Fomblin ^{®}. Vorzugsweise handelt es sich bei dem Mineralöl um Diffelen. Bevorzugt ist dabei, dass das verwendete Treibmittel eine kleine Verdampfungsenthalpie aufweist.

In der Wasserkühlung wird bevorzugt Wasser als Kühlfluid verwendet. Denkbar ist jedoch auch die Verwendung eines anderen Kühlfluids. Hierbei ist es jedoch unter Umständen erforderlich das Kühlfluid im Kreislauf zu führen. Dies erfordert jedoch eine Kühlung des Kühlfluids. In diesem Fall wird durch die vorliegende Erfindung nicht die Menge an Kühlwasser oder eine Kühlfluids reduziert, sondern die zur Kühlung des im Kreislauf gepumpten Kühlfluids erforderliche Energie. Dies ist gleichbedeutend mit der Reduzierung der erforderlichen Kühlwassermenge.

Die Erfindung betrifft ein Verfahren zur Steuerung einer Diffusionspumpe mit einem Gehäuse, ein mit dem Gehäuse verbundenen Siederaum, einem im Bereich des Siederaums angeordneten Heizelements, einer im Gehäuse angeordneten und mit dem Siederaum verbundenen Düse, einem an einer Innenseite des Gehäuses im Bereich der Düse angeordneten Kondensator und einer im Bereich des Kondensators angeordneten Kühlung zur Kühlung des Kondensators, wobei die Heizelementtemperatur des Heizelements während des Pumpvorgang angepasst wird an den oberen Wert des Siedebereiches des verwendeten Treibmittels. Hierdurch wird verhindert, dass unnötig Heizenergie in die Diffusionspumpe eingebracht wird. Ist die Temperatur des Heizelements an den oberen Wert des Siedebereiches des verwendeten Treibmittels angepasst, so ist hierdurch sichergestellt, dass das Treibmittel, insbesondere dessen leichtsiedende Anteile und dessen schwersiedenden Anteile, zum Verdampfen gebracht werden können. Eine höhere Heizelementtemperatur ist nicht erforderlich, sodass keine weitere Energie aufgebracht werden muss. Insbesondere wird hierdurch auch sichergestellt, dass das verwendete Treibmittel nicht thermisch zersetzt wird.

Insbesondere kann zusätzlich zum Anpassen der Heizelementtemperatur die Kondensatortemperatur erfasst werden und durch eine Kondensatorkühlungsregelung die Kühlung des Kondensators in Abhängigkeit zur erfassten Kondenstortemperatur gesteuert werden. Hierdurch ist eine präzise Anpassung der eingebrachten Wärme und der erforderlichen Kühlleistung gegeben.

In einer Weiterentwicklung der erfindungsgemäßen Verfahren wird durch die Kondensatorkühlungsregelung sichergestellt, dass die Temperatur des Kondensators stets unterhalb der Kondensationstemperatur des Treibmittels gehalten wird und hierdurch der Dampfdruck des Treibmittels stets kleiner ist als der Arbeitsdruck der Diffusionspumpe. Somit ist nicht erforderlich durch die Kühlung des Kondensators die Kondensatortemperatur auf die niedrigste mögliche Temperatur zu bringen. Vielmehr erfolgt durch das Verfahren eine individuelle Anpassung der Kondensatortemperatur, die sich insbesondere durch den erforderlichen Arbeitsdruck ändern kann. Hierdurch wird die Menge des erforderlichen Kühlwassers erheblich reduziert.

In einer Weiterentwicklung der erfindungsgemäßen Verfahren wird die Heizelementtemperatur während des Pumpvorgangs angepasst an den oberen Wert des Siedebereichs eines verwendeten Treibmittels. Ein Pumpvorgang umschließt dabei sowohl das Abpumpen der Vakuumkammer, als auch das Halten des Arbeitsdrucks in der Vakuumkammer. Durch das Anpassen der Heizelementtemperatur auf den oberen Wert des Siedebereichs wird eine möglichst geringe Heizleistung erzielt, wobei gleichzeitig ein zuverlässiges verdampfen des Treibmittel sichergestellt wird. Der Siedebereich des verwendeten Treibmittels umfasst dabei den Bereich, in dem leichtsiedende Anteile des Treibmittels und schwersiedende Anteile des Treibmittels verdampfen. Wird die Temperatur an den oberen Wert des Siedebereichs des veränderten Treibmittels angepasst, verdampfen sowohl die leichtsiedenden als auch die schwersiedenden Anteile des Treibmittels.

In einer Weiterbildung der erfindungsgemäßen Verfahren wird die Heizelementtemperatur während des Pumpvorgangs an die erforderliche Saugleistung der Pumpe angepasst. Durch die Erhöhung der Heizelementtemperatur wird insbesondere die Saugleistung der Diffusionspumpe erhöht. Dies ist insbesondere erforderlich beim Abpumpen der Vakuumkammer, da in dieser Pumpsituation eine große Saugleistung erforderlich ist, um schnell den Arbeitsdruck in der Vakuumkammer erreichen zu können.

In einer Weiterentwicklung der erfindungsgemäßen Verfahren wird die Heizelementtemperatur zwischen Pumpvorgängen reduziert. Ist kein Pumpen der Diffusionspumpe erforderlich, kann die Heizelementtemperatur reduziert werden um Energie einzusparen. Insbesondere wird die Heizelementtemperatur zwischen den Pumpvorgängen reduziert, mindestens um den Wert des Siedebereiches des verwendeten Treibmittels. Liegt die Heizelementtemperatur unter dem Siedebereich des verwendeten Treibmittels wird kein oder weinig Treibmittel verdampft, sodass keine Pumpwirkung mehr erzielt wird und gleichzeitig erhebliche Heizleistung eingespart werden kann. Selbstverständlich kann die Heizelementtemperatur zwischen den Pumpvorgängen weiter reduziert werden, wobei das Treibmittel für den nächsten Pumpvorgang dann zunächst energieintensiv aufgeheizt werden muss. Auch erfolgt unterhalb einer gewissen Temperatur eine Akkumulation von Gas im Treibmittel, sodass das Treibmittel zu Beginn des nächsten Pumpvorgangs erst entgast werden muss.

In einer Weiterentwicklung der erfindungsgemäßen Verfahren wird bei einer Reduktion der Heizelementtemperatur gleichzeitig die Kondensatortemperatur angepasst. Dies erfolgt insbesondere zwischen den Pumpvorgängen. Jedoch kann auch während des Haltens des Arbeitsdrucks in der Vakuumkammer zusammen mit der Heizelementtemperatur gleichzeitig die Kondensatortemperatur angepasst werden, sodass ein optimaler Diffusionsprozess aufrecht erhalten werden kann, bei dem die Diffusionspumpe energiesparend betrieben wird. Vorzugsweise wird bei einer Reduktion der Heizelementtemperatur die Kondensatortemperatur erhöht. Dies erfolgt jedoch nur solange der Dampfdruck des Treibmittels bei der erhöhten Kondensatortemperartur geringer ist als der Arbeitsdruck der Diffusionspumpe.

In einer Weiterentwicklung der erfindungsgemäßen Verfahren wird bei dem Verfahren eine, wie oben beschrieben, ausgebildete Diffusionspumpe verwendet.

Weiter betrifft ein Beispiel die Verwendung einer Wärmepumpe mit einer Diffusionspumpe. Dabei ist die Wärmepumpe vorzugsweise weitergebildet wie vorstehend beschrieben. Besonders bevorzugst ist auch die Diffusionspumpe weitergebildet beschrieben wie vorstehend beschrieben.

Nachfolgend wird die Erfindung anhand bevorzugter Ausführungsformen unter Bezugnahme auf die anliegenden Zeichnungen näher erläutert.

Es zeigen:
- Figur 1: Eine schematische Darstellung einer Diffusionspumpe gemäß eines ersten Beispiels,
- Figur 2: eine schematische Darstellung des Pumpvorgangs anhand pumpspezifischer Größen,
- Figur 3: eine schematische Darstellung einer Diffusionspumpe gemäß eines zweiten Beispiels und
- Figur 4: eine schematische Darstellung einer Diffusionspumpe gemäß eines dritten Beispiels.

Die Diffusionspumpe gemäß eines Beispiels weist ein Gehäuse 10 auf, welches an seinem hochvakuumseitigen Ende einen Flansch 12 aufweist, mit dem das Gehäuse 10 mit einer nicht dargestellten Vakuumkammer verbunden werden kann. Das Gehäuse 10 ist mit einem Siederaum 14 verbunden, welcher ein Heizelement 16 aufweist. Durch das Heizelement 16 wird ein Treibmittel 18 verdampft, das in der Diffusionspumpe aufsteigt und durch die beiden Düsen 20, 22 in das Gehäuse austritt. Vorhandene Gasteilchen werden durch den Treibmitteldampf mitgerissen. Der Treibmitteldampf gelangt zu einem Kondensator 24, welcher im Bereich der Düsen 20, 22 am Gehäuse 10 angeordnet ist. Der Kondensator 24 weist eine Kühlung 26 auf. In der dargestellten Ausführungsform handelt es sich bei der Kühlung 26 um eine Wasserkühlung mit einer Zuleitung 27 und einer Ableitung 25.

Der Treibmitteldampf kondensiert am Kondensator 24 und gelangt zurück in den Siederaum 14.

Zwischen dem Kondensator 24 und dem Siederaum 14 ist ein Vorvakuumstutzen 28 angeordnet, welcher mit einer nicht dargestellten Vorvakuumpumpe verbindbar ist. Vom Treibmitteldampf gefördertes Gas wird über den Vorvakuumstutzen 28 durch die Vorvakuumpumpe abgesaugt.

Um zu verhindern, dass Wärme des Heizelements 16 verloren geht, ist der Siederaum 14 vollständig mit einer Isolierung 30 umgeben. Hierdurch wird verhindert, dass Wärme aus dem Siederaum 14 an die Umgebung abgegeben wird. Dies reduziert die erforderliche Heizleistung des Heizelements 16.

Mit dem Heizelement 16 ist eine Heizelementregelung 32 verbunden, durch die die Heizleistung des Heizelements an die jeweilige Pumpsituation angepasst werden kann.

Im Bereich des Kondensators 24 ist eine Temperaturerfassung 34 angeordnet, die die Kondensatortemperatur T_{c} erfasst. Hierbei wird die Kondensatortemperatur T_{c} an der Kondensatoroberfläche gemessen. Die Temperatur T_{c} des Kondensators 24 kann auch erfasst werden über die Temperatur des Kühlwassers der Ableitung 25. Die Temperaturerfassung ist mit einer Kondensatorkühlungsregelung verbunden, welche als Thermostatventil 36 ausgebildet ist. Über das Thermostatventil 36 lässt sich der Kühlwasserdurchfluss V durch die Kühlung 26 des Kondensators 24 in Abhängigkeit von der erfassten Oberflächentemperatur T_{c} des Kondensators 24 anpassen.

Um sicherzustellen, dass immer eine Mindestkühlung des Kondensators 24 erfolgt, weist die Kondensatorkühlungsregelung eine Notfalleinrichtung auf, welche als Bypass 38 zum Thermostatventil 36 vorgesehen ist. Bei einem Ausfall der Kondensatorkühlungsregelung wird weiterhin Kühlwasser durch den Bypass 38 zur Kühlung 26 des Kondensators 24 geleitet, sodass der Treibmitteldampf weiter kondensiert. Die Notfalleinrichtung ist insbesondere erforderlich bei Stromausfall oder plötzlichem Abschalten der Diffusionspumpe und stellt sicher, dass durch die Mindestkühlung des Kondensators 24 die Diffusionspumpe ordnungsgemäß heruntergefahren werden kann, ohne dass Treibmitteldampf in die Vakuumkammer gelangt.

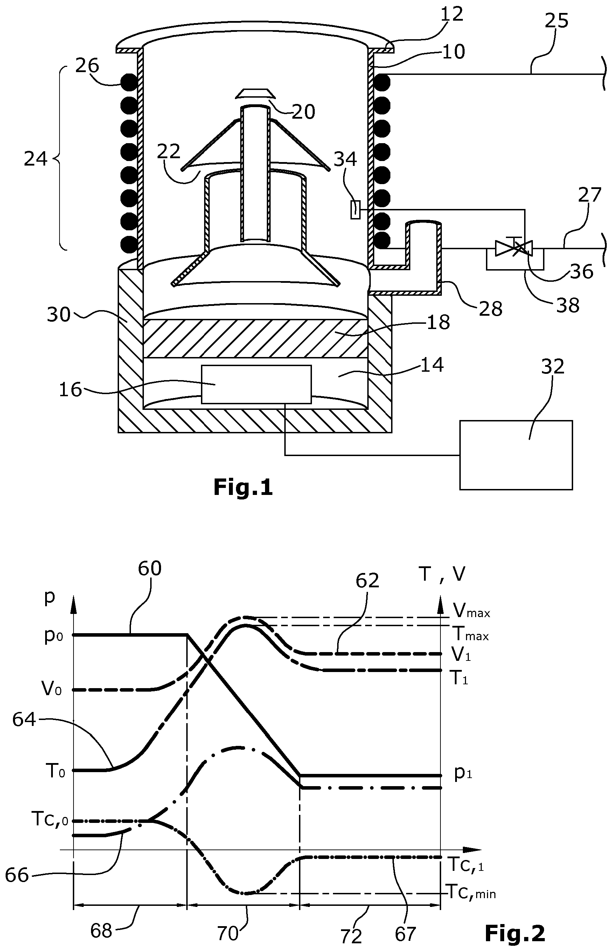

Der Pumpvorgang wird anhand der Figur 2 detailliert erläutert, wobei es sich um eine schematische Darstellung handelt und keine exakten Werte wiedergibt. Insbesondere ist das Beispiel nicht beschränkt auf ausschließlich den gezeigten Verlauf des Pumpvorgangs, da ein exemplarischer Pumpvorgang gezeigt ist. In Figur 2 sind dabei für die unterschiedlichen Pumpsituationen der Druck p 60, der Kühlmitteldurchfluss V 62, die Heizelementtemperatur T 64, der Dampfdruck des Treibmittels 66 sowie die Kondensatortemperatur T_{c} 67 dargestellt. Die linke vertikale Achse des Diagramms beschreibt dabei den Druck für die Linie 60 und die Linie 66 wohingegen die rechte vertikale Achse die Temperatur für die Linien 64 und 67 sowie den Kühlmitteldurchfluss für die Linie 62 bezeichnet. Auf der horizontalen Achse des Diagramms der Figur 2 sind die unterschiedlichen Pumpsituationen abgetragen.

Im Bereich 68 besteht nur eine geringe oder keine Pumpwirkung. In der Vakuumkammer herrscht ein Druck p₀. Diese Situation liegt zwischen zwei Pumpvorgänge und insbesondre in einem Standby-Betrieb vor.

In dem zweiten Bereich 70 erfolgt eine Druckreduzierung vom Ausgangsdruck p₀ zum Arbeitsdruck p₁ durch ein Abpumpen. Beim Abpumpen 70 der Vakuumkammer wird die Heizleistung und entsprechend die Temperatur T des Heizelements 16 erhöht, auf ihren maximalen Wert Tₘₐₓ , um die Saugleistung der Diffusionspumpe zu erhöhen. Um den erhöhten Wärmeintrag durch das Heizelement 16 zu kompensieren, wird die Kühlwassermenge V zur Kühlung des Kondensators 24 erhöht. Hierbei ist es nicht erforderlich, dass die Kondensatortemeperatur T_{c} im Bereich 70 ein Minimum T_{c,min} ausbildet. Der Kühlmitteldurchfluss V durch den Kondensator 24 kann so gesteuert werden, dass die Kondensatortemperatur T_{c} kontinuierlich von ihrem Ausgangswert T_{c,0} auf den Arbeitswert T_{c,1} abfällt.

Ist in der Vakuumkammer der Arbeitsdruck p₁ erreicht, wird durch die Heizelementregelung die Temperatur T des Heizelements 16 an den oberen Wert des Siedebereiches des verwendeten Treibmittels angepasst. Hierbei wird die Temperatur T des Heizelements 16 von ihrem maximalen Wert Tₘₐₓ, der für das schnelle Erreichen des Arbeitsdrucks p₁ in Bereich 70 erforderlich ist, reduziert auf den Wert T₁. Hierdurch ist weiterhin eine Pumpwirkung sichergestellt, da insbesondere T₁ größer ist als T₀, so dass jedoch unnötiger Wärmeeintrag verhindert wird. Die Verringerung der Heizleistung von Tₘₐₓ auf T₁ des Heizelements 16 führt gleichzeitig dazu, dass die durchflossene Menge an Kühlwasser V durch die Kondensatorkühlungsregelung in Form des Thermostatventils 36 reduziert wird von Vₘₐₓ auf V₁. Hierdurch erhöht sich die Oberflächentemperatur des Kondensators 24 auf T_{c,1} bzw. wird die Kondensatorendtemperatur T_{c,1} erreicht. Eine Erhöhung der Oberflächentemperatur des Kondensators T_{c} ist jedoch nur vorgesehen falls der Dampfdruck 66 des Treibmittels bei der erhöhten Temperatur weiterhin unterhalb der Arbeitsdrucks p₁ der Vakuumkammer liegt, wie in Fig. 2 gezeigt.

Zwischen zwei Pumpvorgängen 68 wird die Temperatur T des Heizelements 16 reduziert unter den unteren Wert des Siedebereichs des verwendeten Treibmittels. Hierdurch wird kein oder nur sehr wenig Treibmittel 18 verdampft. Eine Pumpenwirkung ist weder erforderlich, noch wird sie bei reduzierter Heizleistung des Heizelements 16 erzielt. Gleichzeitig mit der Reduzierung der Temperatur T des Heizelements 16 auf T₀ zwischen zwei Pumpvorgängen wird der Kühlmitteldurchfluss V der Kühlung 26 des Kondensators 24 durch das Thermostatventil 36 reduziert auf V₀.

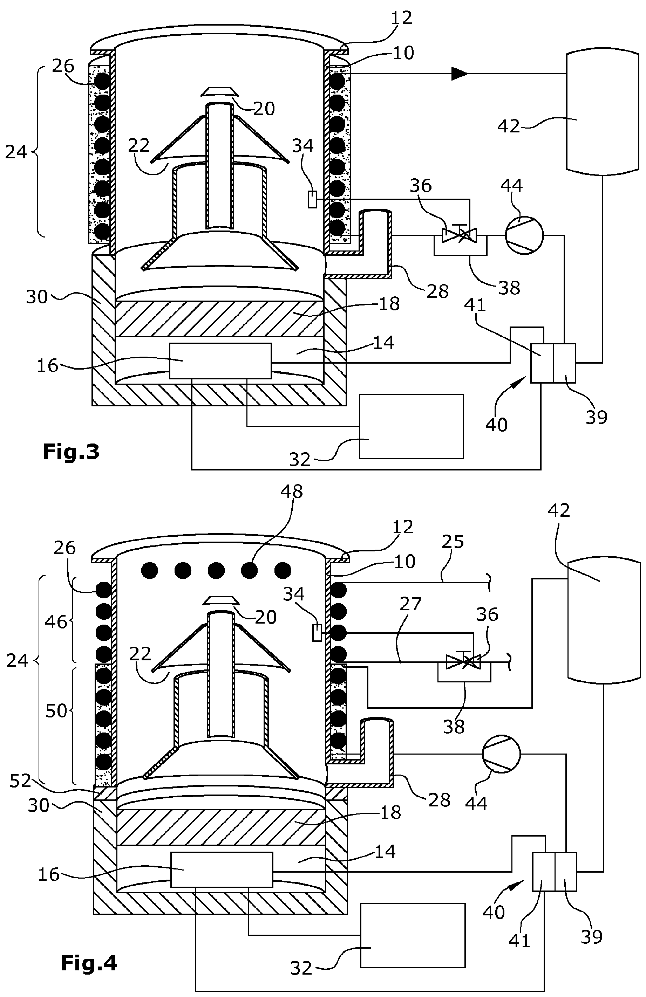

Figur 3 zeigt ein zweites Beispiel. Gleiche Teile werden dabei mit gleichen Referenznummern bezeichnet. Auch wenn es sich hierbei um eine alternatives Beispiel handelt, so lassen sich dennoch die einzelnen Merkmale zur Einsparung der erforderlichen Energie bei einer Diffusionspumpe aus dem ersten Beispiel mit des zweiten Beispiels kombinieren, sofern sich diese Merkmale nicht gegenseitig ausschließen.

In zweiten Beispiel ist die Kühlung 26 verbunden mit einer Wärmepumpe 40, welche einen Kondensator 41 und einen Verdampfer 39 aufweist. Kühlwasser gelangt von der Kühlung 26 am Gehäuse 10 der Diffusionspumpe zu einem Reservoir 42. Von dem Reservoir 42 gelangt das noch warme Kühlwasser zu der Wärmepumpe 40, die dem Kühlwasser Wärme entzieht. Hierdurch wird die Temperatur des Kühlwassers reduziert. Das so abgekühlte Kühlwasser wird über eine Förderpumpe 44 durch das Thermostatventil 36 oder den Bypass 38 der Kühlung 26 zugeführt. Die dem Kühlwasser durch die Wärmepumpe entzogene Wärmeenergie wird über einen Heizkreislauf dem Heizelement 16 zugeführt. Somit wird durch die Kühlung 26 abgeführte Wärme verwendet, um das Treibmittel 18 durch das Heizelement 16 aufzuheizen. Die durch die Kühlung 26 abgeführte Wärme stellt somit keine Verlustleitsung da und gleichzeitig kann die nötige Energie, die dem Heizelement 16 extern zugeführt werden muss beispielsweise in Form von elektrischer Energie, reduziert werden. Dabei ist die Wärmepumpe 40 insbesondere ausgebildet als Kompressionswärmepumpe. Insbesondere kann es vorteilhaft sein die Strömungsrichtung umzudrehen, sodass das Kühlwasser zunächst in der Wärmepumpe 40 seine Wärmeenergie abgibt und sodann in das Reservoir 42 gelangt. Von dort wird das Kühlwasser mittels der Förderpumpe 44 zur Kühlung 26 gefördert.

In Figur 4 ist ein drittes Beispiel dargestellt, wobei gleiche Teile mit gleichen Referenznummern bezeichnet werden. Merkmale der vorhergehenden Beispiele können zur Reduzierung des Energiebedarfs der Diffusionspumpe mit dem dritten Beispiel kombiniert werden, solange sich die Merkmale nicht gegenseitig ausschließen.

In dem dritten Beispiel ist der hochvakuumseitige Bereich 46 ausgebildet als Wasserkühlung 26. Ebenfalls ist eine Dampfsperre 48 vorgesehen, welche eine Wasserkühlung aufweist. Der sich in Richtung des Heizelements 16 anschließende Bereich 50 des Kondensators 24 ist mit einer Wärmepumpe 40 verbunden, sodass Wärme aus dem Bereich 50 über die Wärmepumpe 40 dem Heizelement 16 zugeführt wird und hierüber das Treibmittel 18 aufheizt. Zusätzlich kann auch im Kreislauf des Wärmetauschers ein steuerbares Thermostatventil angeordnet sein, welches insbesondere durch die Temperaturerfassung 34 oder eine zusätzliche im Bereich 50 angeordnete Temperaturerfassung steuerbar ist.

Insbesondere ist der Siederaum 14 durch einen Isolator 52 thermisch getrennt vom Gehäuse 10. Vom Heizelement 16 erzeugte Wärme gelangt auf Grund des Isolators 52 nicht zum Gehäuse 10 und muss daher nicht über die Kühlung 26 oder die Wärmepumpe 40 abgeführt werden. Dies reduziert den Energieverbrauch der Diffusionspumpe weiter. Der Isolator 52 weist dabei eine geringe Wärmeleitfähigkeit auf.

## Patentansprüche

1. Verfahren zur Steuerung einer Diffusionspumpe mit
einem Gehäuse (10),
einem mit dem Gehäuse (10) verbundenen Siederaum (14),
einem im Bereich des Siederaums (14) angeordneten Heizelement (16),
einer im Gehäuse (10) angeordneten und mit dem Siederaum (14) verbundenen Düse (20,22),
einem an einer Innenseite des Gehäuses (10) im Bereich der Düse (20,22) angeordneten Kondensator (24) und
einer im Bereich des Kondensators (24) angeordneten Kühlung (26) zur Kühlung des Kondensators (24),
**dadurch gekennzeichnet, dass** die Heizelementtemperatur während des Pumpvorgangs angepasst wird an den oberen Wert des Siedebereichs des verwendeten Treibmittels (18).

2. Verfahren nach Anspruch 1, bei welchem die Kondensatortemperatur erfasst wird und durch eine Kondensatorkühlungsregelung die Kühlung (26) des Kondensators (24) in Abhängigkeit zu der erfassten Kondensatortemperatur gesteuert wird.

3. Verfahren nach einem der Ansprüche 1 oder 2, bei welchem durch die Kondensatorkühlungsregelung die Kondensatortemperatur stets unterhalb der Kondensationstemperatur eines Treibmittels (18) gehalten wird und der Dampfdruck des Treibmittels (18) stets kleiner ist als ein Arbeitsdruck der Diffusionspumpe.

4. Verfahren nach einem der Ansprüche 1 bis 3, bei welchem die Heizelementtemperatur während des Pumpvorgangs an die erforderliche Saugleistung der Diffusionspumpe angepasst wird.

5. Verfahren zur nach einem der Ansprüche 1 bis 4, bei welchem die Heizelementtemperatur zwischen Pumpvorgängen reduziert wird.

6. Verfahren nach Anspruch 5, bei welchem die Heizelementtemperatur zwischen den Pumpvorgängen reduziert wird mindestens um den Wert des Siedebereichs eines verwendeten Treibmittels (18).

7. Verfahren nach einem der Ansprüche 1 bis 6, bei welchem bei einer Reduktion der Heizelementtemperatur gleichzeitig die Kondensatortemperatur angepasst wird.

## Claims

1. A method for controlling a diffusion pump comprising
a housing (10),
a boiling chamber (14) connected to said housing (10),
a heating element (16) arranged in the area of said boiling chamber (14),
a nozzle (20, 22) arranged in said housing (10) and connected to said boiling chamber (14),
a condenser (24) arranged at an inner surface of said housing (10) in the area of said nozzle (20, 22), and
a cooling system (26) configured for cooling said condenser (24) and arranged in the area of said condenser (24),
**characterized in that** during the pumping process the heating element temperature is adjusted to the upper value of the boiling range of the propellant (18) used.

2. The method according to claim 1, wherein the condenser temperature is measured and the cooling system (26) of the condenser (24) is controlled by a condenser cooling system regulator depending on the measured condenser temperature.

3. The method according to any one of claims 1 or 2, wherein the condenser cooling system regulator keeps the condenser temperature constantly below the condensation temperature of a propellant (18) and the vapor pressure of said propellant (18) is always lower than an operating pressure of the diffusion pump.

4. The method according to any one of claims 1 to 3, wherein the heating element temperature is adjusted to the required suction capacity of the diffusion pump during the pumping process.

5. The method according to one of claims 1 to 4, wherein the heating element temperature is reduced between pumping processes.

6. The method according to claim 5, wherein between pumping processes the heating element temperature is reduced by at least the value of the boiling range of the propellant (18) used.

7. The method according to any one of claims 1 to 6, wherein during a reduction of the heating element temperature the condenser temperature is adjusted at the same time.

## Revendications

1. Procédé de commande d'une pompe à diffusion, comprenant un carter (10),
une chambre d'ébullition (14) reliée au carter (10),
un élément chauffant (16) agencé dans la région de la chambre d'ébullition (14), une tuyère (20, 22) agencée dans le carter (10) et reliée à la chambre d'ébullition (14),
un condenseur (24) agencé sur un côté intérieur du carter (10) dans la région de la tuyère (20, 22), et
un dispositif de refroidissement (26) agencé dans la région du condenseur (24) et permettant de refroidir le condenseur (24),
**caractérisé en ce que** la température de l'élément chauffant est adaptée, pendant l'opération de pompage, à la valeur supérieure de la plage d'ébullition du fluide moteur (18) utilisé.

2. Procédé selon la revendication 1, dans lequel la température de condenseur est détectée, et le dispositif de refroidissement (26) du condenseur (24) est commandé par un dispositif de régulation de refroidissement de condenseur en fonction de la température de condenseur détectée.

3. Procédé selon l'une des revendications 1 ou 2, dans lequel la température de condenseur est toujours maintenue en dessous de la température de condensation d'un fluide moteur (18) grâce au dispositif de régulation de refroidissement de condenseur, et la pression de vapeur du fluide moteur (18) est toujours inférieure à une pression de service de la pompe à diffusion.

4. Procédé selon l'une des revendications 1 à 3, dans lequel la température de l'élément chauffant est adaptée à la puissance d'aspiration requise de la pompe à diffusion pendant l'opération de pompage.

5. Procédé selon l'une des revendications 1 à 4, dans lequel la température de l'élément chauffant est réduite entre les opérations de pompage.

6. Procédé selon la revendication 5, dans lequel la température de l'élément chauffant est réduite entre les opérations de pompage d'au moins la valeur de la plage d'ébullition d'un fluide moteur (18) utilisé.

7. Procédé selon l'une des revendications 1 à 6, dans lequel la température de condenseur est adaptée simultanément en cas de réduction de la température de l'élément chauffant.
